# EUROPÄISCHE PATENTSCHRIFT

(11) **EP 3 982 517 B1**
(45) Veröffentlichungstag und Bekanntmachung des Hinweises auf die Patenterteilung: **17.09.2025**
(21) Anmeldenummer: 21201557.2
(22) Anmeldetag: 08.10.2021
(51) Int. Cl.: H02K 3/28, H02K 3/12

(54) **STATOR FÜR EINE ELEKTRISCHE MASCHINE MIT VERBESSERTEM SCHUTZ GEGEN POTENTIALDIFFERENZEN ZWISCHEN BENACHBARTEN STATORSPULEN**
STATOR FOR AN ELECTRIC MACHINE WITH IMPROVED PROTECTION AGAINST POTENTIAL DIFFERENCES BETWEEN ADJACENT STATOR COILS
STATOR POUR UNE MACHINE ÉLECTRIQUE À PROTECTION AMÉLIORÉE CONTRE LES DIFFÉRENCES DE POTENTIEL ENTRE LES BOBINES DE STATOR ADJACENTES

(30) Priorität: 12.10.2020 DE 102020126704
(43) Veröffentlichungstag der Anmeldung: 13.04.2022
(73) Patentinhaber: Valeo eAutomotive Germany GmbH, 91056 Erlangen (DE)
(72) Erfinder: MÜLLER, Michael, 97616 Bad Neustadt a.d.Saale (DE); MENZ, Michael, 97616 Bad Neustadt a.d.Saale (DE)
(74) Vertreter: Valeo Powertrain Systems

(56) Entgegenhaltungen:
- WO-A1-2014/184951
- DE-A1- 1 488 661
- DE-A1- 10 331 841
- DE-A1- 102017 210 445
- US-A- 5 898 251
- US-A1- 2008 238 240

## Beschreibung

### TECHNISCHES GEBIET

Es wird ein Stator für eine elektrische Maschine angegeben, welcher einen ringförmigen Stator-Grundkörper mit mehreren aneinandergereihten Statorblechen und nach innen hin offenen Statornuten umfasst sowie in den Statornuten angeordnete Statorspulen einer Statorwicklung, welche mehreren Phasen der elektrischen Maschine zugeordnet sind. Weiterhin wird eine elektrische Maschine mit einem Rotor offenbart, der gegenüber einem Stator der oben genannten Art um die Rotationsachse des Rotors drehbar gelagert ist. Darüber hinaus wird eine Antriebsanordnung mit einer elektrischen Maschine der oben genannten Art und eine mit der Statorwicklung verbundene Stromversorgung angegeben, wobei die Stromversorgung dazu eingerichtet ist, elektrisch parallel geschaltete, benachbarte Statorspulen der gleichen Phase mit elektrischem Strom zu beaufschlagen. Schließlich wird ein Fahrzeug mit wenigstens zwei Achsen angegeben, von denen wenigstens eine angetrieben ist, wobei der besagte Antrieb zumindest teilweise oder zeitweise durch die elektrische Maschine der oben genannten Art erfolgt.

### STAND DER TECHNIK

Ein Stator, eine elektrische Maschine, eine Antriebsanordnung sowie ein Fahrzeug der oben angegeben Bauart sind aus dem Stand der Technik grundsätzlich bekannt. Insbesondere kann die Stromversorgung der Antriebsanordnung durch einen Wechselrichter gebildet sein, welcher die elektrische Maschine aus einer Batterie beziehungsweise aus einem Akkumulator mit elektrischer Energie versorgt. Immer schneller schaltende elektronische Schaltelemente (insbesondere Transistoren) führen zu Spannungsimpulsen mit sehr hoher Flankensteilheit. Durch die hohe Flankensteilheit kommen mitunter Wellenphänomene in den Statorspulen der Statorwicklung zum Tragen, und zwar in dem Sinne, dass eine sich entlang der Drähte benachbarter und parallel geschalteter Statorspulen fortpflanzende Flanke eines Spannungsimpulses zu einer gefährlichen Potentialdifferenz zwischen den Statorspulen führen kann. Dies ist insbesondere an den Stirnseiten des Stators beziehungsweise am Wickelkopf problematisch, da sich dort die besagten Drähte berühren können und die erwähnte Potentialdifferenz Schaden an den Statorspulen anrichten kann. Statoren des Standes der Technik sind in den Dokumenten WO2014/184951 A1, DE 10 2017 210 445 A1, US 2008/0238240 A1 und DE 103 31 841 A1dargestellt.

### OFFENBARUNG DER ERFINDUNG

Eine Aufgabe der Erfindung ist es daher, einen verbesserten Stator für eine elektrische Maschine, eine verbesserte elektrische Maschine, eine verbesserte Antriebsanordnung sowie ein verbessertes Fahrzeug mit einer solchen elektrischen Maschine anzugeben. Insbesondere soll eine Potentialdifferenz zwischen elektrisch parallel geschalteten und benachbarten Statorspulen der gleichen Phase auch bei schnellen Spannungsimpulsen vermieden werden.

Die Aufgabe der Erfindung wird durch die Merkmale des Anspruchs 1 gelöst. Bevorzugte Weiterbildungen sind Gegenstand der abhängigen Ansprüche.

Mit Hilfe der vorgeschlagenen Maßnahmen können die eingangs genannten Nachteile überwunden werden. Insbesondere nimmt die Potentialdifferenz zwischen benachbarten Windungen der Statorspulen auch bei Spannungsimpulsen mit sehr hoher Flankensteilheit keine nennenswerten Werte an. Der Grund ist, dass sich diese Spannungsimpulse in benachbarten Statorspulen in dieselbe Richtung, also radial nach außen oder radial nach innen, fortpflanzen und sich eine Flanke in beiden Statorspulen zur selben Zeit an derselben radialen Position befindet. Das Risiko eines elektrischen Überschlags zwischen den Statorspulen, insbesondere im Bereich an den Stirnseiten des Stators beziehungsweise am Wickelkopf, ist daher gering. Eine Potentialdifferenz zwischen elektrisch parallel geschalteten und benachbarten Statorspulen der gleichen Phase ist an einer bestimmten Radialposition somit auch bei schnellen transienten Vorgängen, wie sie in modernen Wechselrichtern vorkommen können, Null oder annähernd Null.

Elektrische Leiter, welche von benachbarten Statorspulen der gleichen Phase umfasst sind, sind jeweils im Wesentlichen schraubenlinienförmig ausgebildet und erstrecken sich ausgehend von einem Verbindungspukt der Parallelschaltung bezogen auf eine Drehachse des Stator-Grundkörpers radial in die gleiche Richtung. Mit anderen Worten sind elektrische Leiter, welche von benachbarten Statorspulen der gleichen Phase umfasst sind, jeweils im Wesentlichen schraubenlinienförmig ausgebildet, und eine auf eine Drehachse des Stator-Grundkörpers bezogene Radialkomponente einer Längserstreckung der elektrischen Leiter ist ausgehend von einem Verbindungspukt der Parallelschaltung gleich ausgerichtet.

Radial innenliegende Anschlüsse und radial außenliegende Anschlüsse der benachbarten Statorspulen der gleichen Phase können jeweils elektrisch miteinander verbunden, insbesondere direkt miteinander verbunden sein. Die Anschlüsse der benachbarten Statorspulen der gleichen Phase können einen gemeinsamen oder getrennte Sternpunkte aufweisen.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand des in der schematischen Figur der Zeichnung angegebenen Ausführungsbeispiels näher erläutert. Es zeigt dabei:
- Figur 1: eine schematisch im Halbschnitt dargestellte, beispielhafte elektrische Maschine;
- Figur 2: den Stator-Grundkörper der elektrischen Maschine aus Fig. 1 in Vorderansicht;
- Figur 3: einen Schnitt durch den Stator in Detailansicht;
- Figur 4: eine schematische Darstellung einer im Uhrzeigersinn gewickelten Statorspule;
- Figur 5: eine schematische Darstellung einer im Gegenuhrzeigersinn gewickelten Statorspule;
- Figur 6: die Statorspule aus Fig. 4 in technisch gebräuchlicher Darstellung;
- Figur 7: die Statorspulen aus Fig. 4 und 5 in technisch gebräuchlicher Darstellung;
- Figur 8: ein Schalbild eines beispielhaften Stators einer elektrischen Maschine;
- Figur 9: das Schaltbild aus Fig. 8 ergänzt mit Symboldarstellungen der Statorspulen und
- Figur 10: eine elektrische Maschine mit einem Stator der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

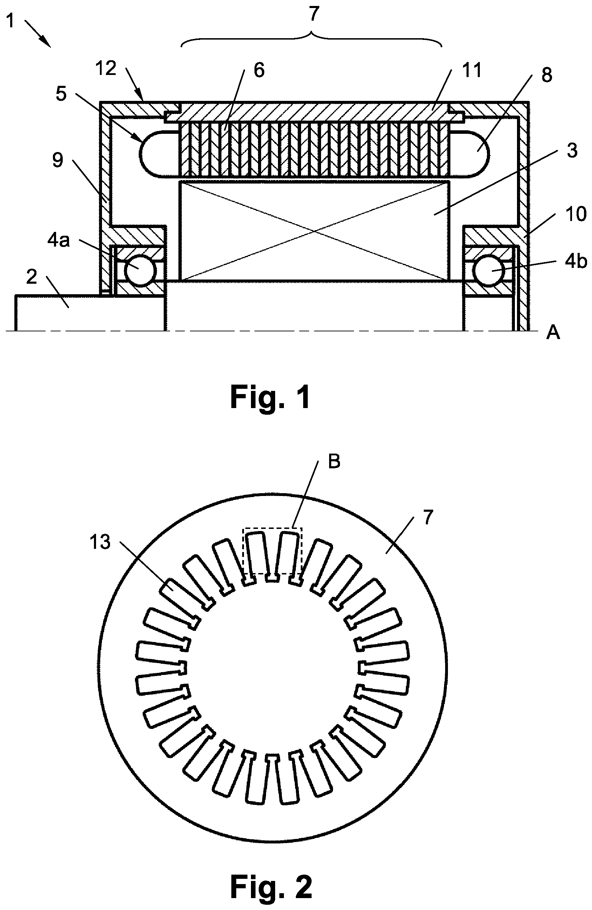

Fig. 1 zeigt einen Halbschnitt durch eine schematisch dargestellte elektrische Maschine 1. Die elektrische Maschine 1 umfasst, eine Welle 2 mit einem darauf sitzenden Rotor 3, wobei die Welle 2 mit Hilfe von (Wälz)lagern 4a, 4b um eine Drehachse A gegenüber einem Stator 5 drehbar gelagert ist. Der Stator 5 umfasst in diesem Beispiel mehrere Statorbleche 6, welche ein Statorblechpaket oder einen Stator-Grundkörper 7 bilden, sowie eine in diesem angeordnete Statorwicklung 8. Konkret sitzt das erste Lager 4a in einem vorderen Lagerschild 9 und das zweite Lager 4b in einem hinteren Lagerschild 10. Weiterhin umfasst die elektrische Maschine 1 ein (mittleres) Gehäuseteil 11, welches das vordere Lagerschild 9 und das hintere Lagerschild 10 verbindet und weiterhin den Stator-Grundkörper 7 aufnimmt. Das vordere Lagerschild 9, das hintere Lagerschild 10 und das Gehäuseteil 11 bilden in diesem Beispiel somit das Gehäuse 12 der elektrische Maschine 1.

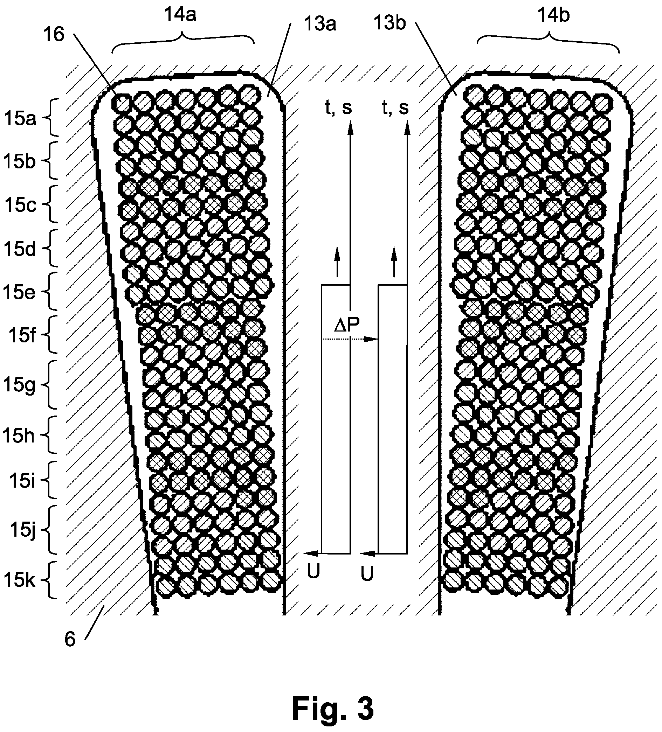

Fig. 2 zeigt den Stator-Grundkörper 7 nun in Vorderansicht, konkret ohne Statorwicklung 8. Gut erkennbar sind die radial nach innen offenen Statornuten 13, welche die Statorwicklung 8 aufnehmen, welche mehrere Statorspulen umfasst. In der Fig. 2 ist weiterhin ein Bereich B gekennzeichnet, der in der Fig. 3 in vergrößerter Form dargestellt ist. Die Statornuten 13 können insbesondere in axialer Richtung oder schraubenlinienförmig verlaufen

Fig. 3 zeigt nun den Fig. 2 gekennzeichneten Bereich B im Schnitt, in diesem Fall mit den in den Statornuten 13a, 13b angeordneten Statorspulen 14a, 14b der Statorwicklung 8. Jede der Statorspulen 14a, 14b weist mehrere Windungen 15a..15k auf, die zur besseren Unterscheidung unterschiedlich schraffiert sind. Jede der Windungen 15a..15k besteht wiederum aus mehreren Spulendrähten 16, im konkreten Fall aus zehn Spulendrähten 16. Es könnte aber auch eine andere Anzahl von Windungen 15a..15k und Spulendrähten 16 vorgesehen sein.

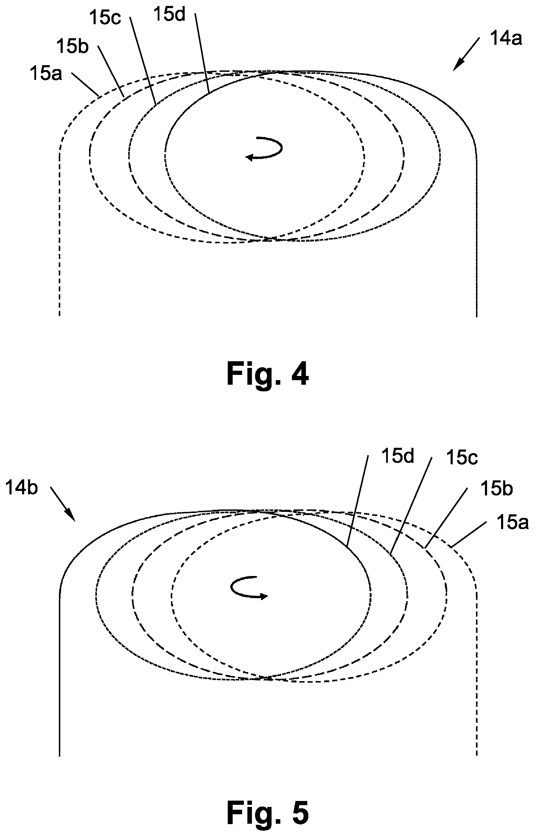

In der Fig. 3 ist jeweils eine Hälfte der Statorspulen 14a, 14b zu sehen, konkret ist eine rechte Hälfte der Statorspule 14a und eine linke Hälfte der Statorspule 14b dargestellt. Die Statorspulen 14a, 14b weisen unterschiedlichen Wicklungssinn auf, so wie das in den Fig. 4 und 5 illustriert ist. Die in Fig. 4 symbolisch dargestellte Statorspule 14a ist im Uhrzeigersinn gewunden, die in Fig. 5 symbolisch dargestellte Statorspule 14b ist im Gegenuhrzeigersinn. Demzufolge sind die Spulendrähte - grob gesprochen - entlang einer linksgängigen oder rechtsgängigen Schraubenlinie angeordnet. In den Fig. 4 und 5 sind der besseren Übersicht halber lediglich vier Windungen 15a..15d symbolisch dargestellt, jeweils mit unterschiedlicher Strichart.

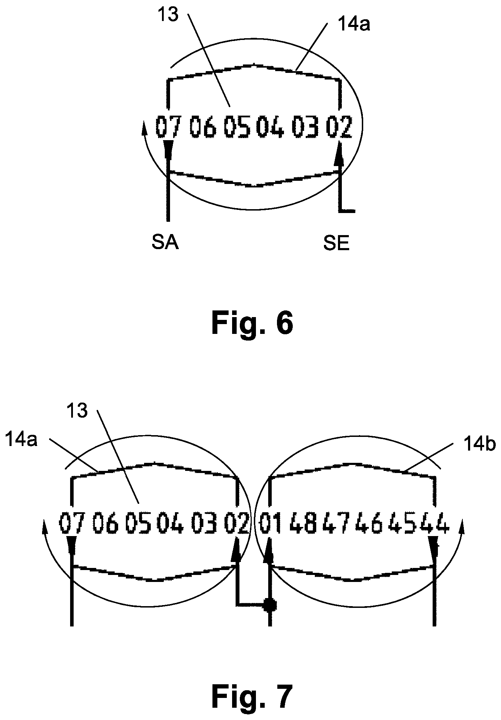

Fig. 6 zeigt die Statorspule 14a und ihre Anordnung in den Statornuten 13 in technisch allgemein gebräuchlicher Notation. Konkret ist die Statorspule 14a in Form eines Sechsecks dargestellt, und die Statornuten 13 sind mit Zahlen nummeriert. Zudem ist der Spuleneingang SE und der Spulenausgang SA bezeichnet.

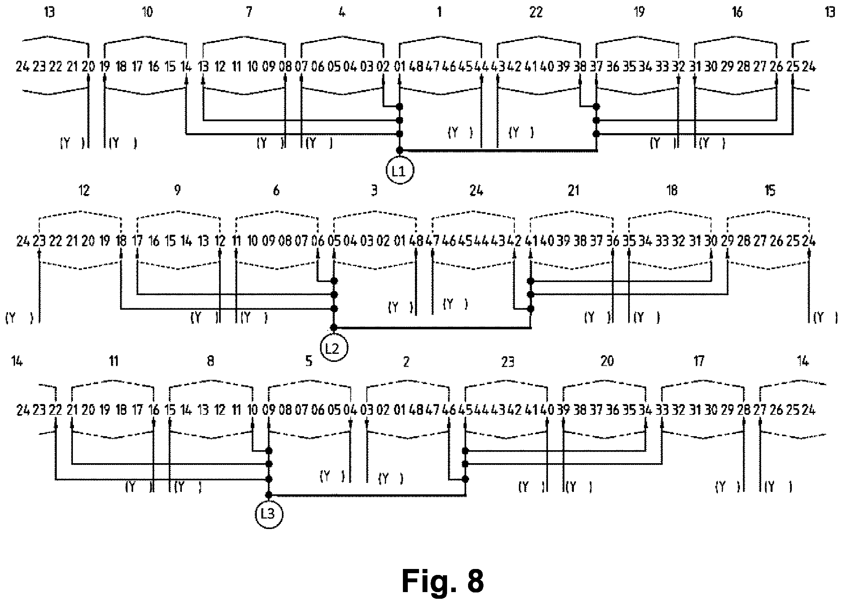

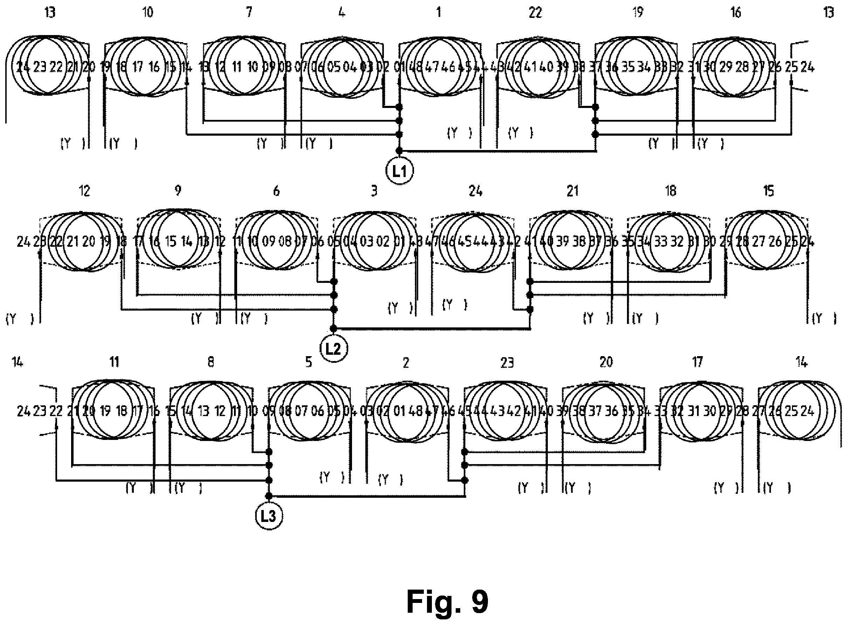

Fig.7 zeigt das aus den Statorspulen 14a und 14b gebildete Spulenpaar in technisch allgemein gebräuchlicher Notation. Wie aus der Fig. 7 ersichtlich ist, sind die Statorspulen 14a, 14b elektrisch parallel geschaltet und belegen die Statornuten 13 mit den Nummern "01", "02", "07" und "44". Demzufolge sind in der Fig. 3 die Statornut 13a mit der Nummer "02" und die Statornut 13b mit der Nummer "01" dargestellt. Durch die Parallelschaltung sind die Statorspulen 14a, 14b einer Phase L1 von mehreren Phasen L1..L3 der elektrischen Maschine 1 zugeordnet (siehe auch Fig. 8 und 9).

Die Fig. 8 zeigt ein beispielhaftes Wicklungsschema beziehungsweise Schaltbild einer achtpoligen Einschichtwicklung mit 48 Statornuten 13. Die Statorspulen 14a, 14b sind dabei ebenfalls mit Nummern versehen. Die Fig. 9 zeigt schließlich das Wicklungsschema beziehungsweise Schaltbild aus Fig. 8 ergänzt mit dem symbolischen Windungen 15a..15k.

Es wird somit ein Stator 5 für eine elektrische Maschine 1 offenbart, welcher einen ringförmigen Stator-Grundkörper 7 mit nach innen hin offenen Statornuten 13, 13a, 13b umfasst sowie in den Statornuten 13, 13a, 13b angeordnete Statorspulen 14a, 14b, welche mehreren Phasen L1..L3 der elektrischen Maschine 1 zugeordnet sind. Benachbarte Statorspulen 14a, 14b der gleichen Phase L1 sind dabei gegensinnig gewickelt und elektrisch parallel geschaltet. Insbesondere sind die radial innenliegenden Anschlüsse der Statorspulen 14a, 14b und die radial außenliegenden Anschlüsse der Statorspulen 14a, 14b der gleichen Phase L1 jeweils elektrisch miteinander verbunden. Eine mit der Phase L1 verbundene Stromversorgung erzeugt in den Statorspulen 14a, 14b daher einen Stromfluss mit unterschiedlichem Windungssinn. Insbesondere sind, so wie das hier der Fall ist, alle benachbarten Statorspulen 14a, 14b der gleichen Phase L1 oder L2 oder L3 gegensinnig gewickelt und elektrisch parallel geschaltet.

Daraus resultiert der Vorteil, dass die Potentialdifferenz zwischen benachbarten Windungen 15a..15k der Statorspulen 14a, 14b auch bei Spannungsimpulsen mit sehr hoher Flankensteilheit keine nennenswerten Werte annimmt. Der Grund ist, dass sich diese Spannungsimpulse in benachbarten Statorspulen 14a, 14b in dieselbe Richtung, also radial nach außen oder radial nach innen, fortpflanzen und sich eine Flanke in beiden Statorspulen 14a, 14b zur selben Zeit an derselben radialen Position befindet. Das Risiko eines elektrischen Überschlags zwischen den Statorspulen 14a, 14b, insbesondere im Bereich an den Stirnseiten des Stators 5 beziehungsweise am Wickelkopf, ist daher gering.

In der Fig. 3 ist für jede Statorwicklung 14a, 14b ein Spannungs-Weg-Diagramm U/s beziehungsweise Spannungs-Zeit-Diagramm U/t dargestellt. In dem Diagramm ist erkennbar, dass sich eine Flanke eines Spannungsimpulses vom Spuleneingang SE radial nach außen fortpflanzt und an einer bestimmten Radialposition zu einem bestimmten Zeitpunkt t in beiden Statorwicklung 14a, 14b dieselbe elektrische Spannung vorliegt. Eine Potentialdifferenz ΔP an einer bestimmten Radialposition ist auch bei schnellen transienten Vorgängen, wie sie in modernen Wechselrichtern vorkommen können, Null oder annähernd Null.

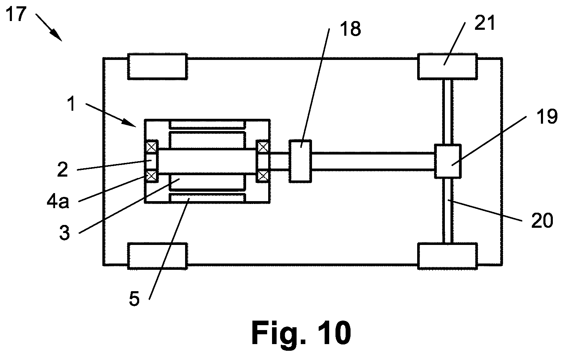

Die Fig. 10 zeigt schließlich die in ein Fahrzeug 17 eingebaute elektrische Maschine 1. Das Fahrzeug 17 weist wenigstens zwei Achsen auf, von denen wenigstens eine angetrieben ist. Konkret ist der Elektromotor 1 mit einem optionalen Getriebe 18 und einem Differentialgetriebe 19 verbunden. An das Differentialgetriebe 19 schließen die Halbachsen 20 der Hinterachse an. An den Halbachsen 20 sind schließlich die angetriebenen Räder 21 montiert. Der Antrieb des Fahrzeugs 17 erfolgt zumindest teilweise oder zeitweise durch die elektrische Maschine 1. Das heißt, die elektrische Maschine 1 kann zum alleinigen Antrieb des Fahrzeugs 17 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Stator (5) für eine elektrische Maschine (1), umfassend einen ringförmigen Stator-Grundkörper (7) mit mehreren Statorblechen (6) und nach innen hin offenen Statornuten (13, 13a, 13b) sowie in den Statornuten (13, 13a, 13b) angeordnete Statorspulen (14a, 14b) einer Statorwicklung (8), welche mehreren Phasen (L1..L3) der elektrische Maschine (1) zugeordnet sind, wobei benachbarte Statorspulen (14a, 14b) der gleichen Phase (L1..L3) gegensinnig gewickelt und elektrisch parallel geschaltet sind,
wobei elektrische Leiter (16), welche von den benachbarten Statorspulen (14a, 14b) umfasst sind, jeweils im Wesentlichen schraubenlinienförmig ausgebildet sind und sich ausgehend von einem Verbindungspunkt der Parallelschaltung bezogen auf eine Drehachse (A) des Stator-Grundkörpers (7) radial in die gleiche Richtung erstrecken.

2. Stator (5) nach Anspruch 1, **dadurch gekennzeichnet, dass** radial innenliegende Anschlüsse und radial außenliegende Anschlüsse der benachbarten Statorspulen (14a, 14b) der gleichen Phase (L1..L3) jeweils elektrisch miteinander verbunden sind, insbesondere direkt miteinander verbunden sind.

3. Stator (5) nach Anspruch 2, **dadurch gekennzeichnet, dass** die Anschlüsse der benachbarten Statorspulen (14a, 14b) der gleichen Phase (L1..L3) einen gemeinsamen oder getrennte Sternpunkte aufweisen.

4. Elektrische Maschine (1) mit einem Rotor (3), der gegenüber einem Stator (5) um die Rotationsachse (A) des Rotors (3) drehbar gelagert ist, **dadurch gekennzeichnet dass** der Stator (5) nach einem der Ansprüche 1 bis 3 ausgebildet ist.

5. Antriebsanordnung umfassend eine elektrische Maschine (1) nach Anspruch 4 und eine mit der Statorwicklung (8) verbundene Stromversorgung, **dadurch gekennzeichnet, dass** die Stromversorgung dazu eingerichtet ist, in den gegensinnig gewickelten und elektrisch parallel geschalteten benachbarten Statorspulen (14a, 14b) der gleichen Phase (L1..L3) einen Stromfluss mit unterschiedlichem Windungssinn zu verursachen.

6. Fahrzeug (17) mit wenigstens zwei Achsen, von denen wenigstens eine angetrieben ist, **dadurch gekennzeichnet dass** der besagte Antrieb zumindest teilweise oder zeitweise durch die elektrische Maschine (1) nach Anspruch 5 erfolgt.

## Claims

1. Stator (5) for an electric machine (1), comprising an annular stator core (7) with multiple stator laminations (6) and stator slots (13, 13a, 13b) open toward the inside, as well as stator coils (14a, 14b) of a stator winding (8) arranged in the stator slots (13, 13a, 13b), which are assigned to multiple phases (L1...L3) of the electric machine (1), wherein adjacent stator coils (14a, 14b) of the same phase (L1...L3) are wound in opposite directions and are electrically connected in parallel,
wherein electrical conductors (16), which are encompassed by the adjacent stator coils (14a, 14b), are each essentially helically (spirally) shaped and extend, starting from a connection point of the parallel connection, radially in the same direction with respect to a rotational axis (A) of the stator core (7).

2. Stator (5) according to claim 1, **characterized in that** the radially inner and radially outer terminals of the adjacent stator coils (14a, 14b) of the same phase (L1...L3) are electrically connected to each other, in particular directly connected to each other.

3. Stator (5) according to claim 2, **characterized in that** the terminals of the adjacent stator coils (14a, 14b) of the same phase (L1...L3) have a common or separate star point(s).

4. Electric machine (1) with a rotor (3) that is rotatably mounted relative to a stator (5) about the rotational axis (A) of the rotor (3), **characterized in that** the stator (5) is designed according to one of claims 1 to 3.

5. Drive assembly comprising an electric machine (1) according to claim 4 and a power supply connected to the stator winding (8), **characterized in that** the power supply is configured to generate a current flow in the oppositely wound and electrically parallel-connected adjacent stator coils (14a, 14b) of the same phase (L1...L3), with different winding direction.

6. Vehicle (17) with at least two axles, of which at least one is driven, **characterized in that** said drive is at least partially or temporarily provided by the electric machine (1) according to claim 5.

## Revendications

1. Stator (5) pour une machine électrique (1), comprenant un corps de stator annulaire (7) avec plusieurs tôles de stator (6) et des encoches de stator (13, 13a, 13b) ouvertes vers l'intérieur, ainsi que des bobines de stator (14a, 14b) d'un enroulement de stator (8) disposées dans les encoches de stator (13, 13a, 13b), lesquelles sont affectées à plusieurs phases (L1..L3) de la machine électrique (1), les bobines de stator adjacentes (14a, 14b) d'une même phase (L1..L3) étant enroulées en sens inverse et connectées électriquement en parallèle,
les conducteurs électriques (16), contenus dans les bobines de stator adjacentes (14a, 14b), étant chacun formés de manière essentiellement hélicoïdale et s'étendant radialement dans la même direction à partir d'un point de connexion du montage en parallèle, par rapport à un axe de rotation (A) du corps de stator (7).

2. Stator (5) selon la revendication 1, **caractérisé en ce que** les connexions situées radialement à l'intérieur et à l'extérieur des bobines de stator adjacentes (14a, 14b) d'une même phase (L1..L3) sont électriquement reliées entre elles, en particulier directement reliées.

3. Stator (5) selon la revendication 2, **caractérisé en ce que** les connexions des bobines de stator adjacentes (14a, 14b) d'une même phase (L1..L3) possèdent un point étoile commun ou des points étoile séparés.

4. Machine électrique (1) avec un rotor (3) monté rotatif par rapport à un stator (5) autour de l'axe de rotation (A) du rotor (3), **caractérisée en ce que** le stator (5) est conçu selon l'une des revendications 1 à 3.

5. Ensemble d'entraînement comprenant une machine électrique (1) selon la revendication 4 et une alimentation électrique connectée à l'enroulement du stator (8), **caractérisé en ce que** l'alimentation est conçue pour générer un flux de courant avec un sens d'enroulement opposé dans les bobines de stator adjacentes (14a, 14b), enroulées en sens inverse et connectées électriquement en parallèle, d'une même phase (L1..L3).

6. Véhicule (17) comportant au moins deux essieux, dont au moins un est entraîné, **caractérisé en ce que** la propulsion dudit essieu est assurée au moins partiellement ou temporairement par la machine électrique (1) selon la revendication 5.
